# EUROPÄISCHE PATENTSCHRIFT

(11) **EP 2 282 929 B1**
(45) Veröffentlichungstag und Bekanntmachung des Hinweises auf die Patenterteilung: **05.09.2012**
(21) Anmeldenummer: 09741835.4
(22) Anmeldetag: 29.04.2009
(51) Int. Cl.: B63H 23/32

(54) **VERFAHREN ZUM BETRIEB EINES GLEITLAGERS**
METHOD FOR OPERATING A SLIDING BEARING
PROCÉDÉ POUR LE FONCTIONNEMENT D'UN PALIER LISSE

(30) Priorität: 09.05.2008 DE 102008023050
(43) Veröffentlichungstag der Anmeldung: 16.02.2011
(73) Patentinhaber: Voith Patent GmbH, 89522 Heidenheim (DE)
(72) Erfinder: HOLSTEIN, Benjamin, 89520 Heidenheim (DE); PERNER, Norman, 89233 Neu-Ulm (DE); SPIEGEL, Klaus, 40627 Düsseldorf (DE)
(74) Vertreter: Dr. Weitzel & Partner
(86) Internationale Anmeldenummer: PCT/EP2009/003090
(87) Internationale Veröffentlichungsnummer: WO 2009/135616

(56) Entgegenhaltungen:
- CH-A5- 667 503
- DE-A1- 1 700 130
- DE-A1- 2 210 979
- DE-A1- 3 248 097
- DE-C- 561 819

## Beschreibung

Die Erfindung betrifft ein Verfahren zum Betrieb eines Gleitlagers, insbesondere eines Gleitlagers zur Lagerung eines Maschinenteils für eine Unterwasserströmungsmaschine, vorzugsweise einer tauchenden Energieerzeugungsanlage.

Tauchenden Energieerzeugungsanlagen dienen zur Energiegewinnung aus einer Gewässerströmung, typischerweise einer Meeresströmung, insbesondere einer Gezeitenströmung. Hierzu werden tauchende Energieerzeugungsanlagen als freistehende Einheiten auf dem Meeresgrund verankert oder sie werden mit schwimmenden Plattformen betrieben. Derartige Energieerzeugungsanlagen können auch zur Ausbildung von Flusswasserkraftwerken verwendet werden. Darüber hinaus ist die vorliegende Erfindung für eine Vielzahl weiterer Unterwasserströmungsmaschinen denkbar, beispielsweise zur Ausbildung von Schiffsantrieben, etwa Pod-Schiffsantrieben.

Wesentlich für tauchende Energieerzeugungsanlagen ist eine ausfallsichere Auslegung der Anlage. Dabei ist zu beachten, dass in der Meeresströmung zusätzlich zum Salzgehalt eine hohe Sedimentfracht transportiert wird. Des Weiteren bestehen für Offshore-Anlagen beschränkte Zugangsmöglichkeiten zur Wartung, so dass alle Anlagenkomponenten, einschließlich der Lagerung für die Wasserturbine, robust und wartungsarm zu konstruieren sind. Aus diesem Grund wurde vorgeschlagen, zur Lagerung von Wasserturbinen für tauchende Energieerzeugungsanlagen Gleitlager einzusetzen, wobei insbesondere wassergeschmierte Gleitlager bevorzugt werden. Solche Lager sind zwar äußert widerstandsfähig gegen den Eintrag von Sedimenten, allerdings besteht eine Schwierigkeit im Anlaufverhalten von Gleitlagern. Dies ist besonders problematisch bei großbauenden Anlagen, die typischerweise zur Energiegewinnung aus langsamen Meeresströmungen notwendig sind. Zusätzlich treten in den Lagern, die für derartige Anlagen Durchmesser im Meterbereich aufweisen, durch die Strömungskräfte Deformationen auf, die zusätzlich das Anlauf- beziehungsweise das Langsamlaufverhalten verschlechtern. Dies führt zu einer Verringerung der Energieausbeute, da die in der Strömung zur Verfügung stehende Energie während eines Wechsels der Anströmungsrichtung aufgrund der Tidenumkehr nicht nutzbar ist. Darüber hinaus werden auf stillstehende Turbinenblätter bereits für geringe Anströmungsgeschwindigkeiten hohe Kräfte aufgebracht.

Zur Umgehung der voranstehend dargelegten Problematik von Gleitlagern wurde durch die Druckschrift US 7,190,087 B2 vorgeschlagen, anstatt Gleitlager magnetische Lager einzusetzen, die durch eine Aufnahme von Permanentmagneten in die Lagerung realisiert werden. Derartige Lagerkonzepte sind jedoch konstruktiv aufwendig und erzwingen die Verwendung kostspieliger Hochleistungspermanentmagnete auf der Basis seltener Erden.

Eine vereinfachte Lagerausbildung für eine bidirektional anströmbare Wasserturbine einer tauchenden Energieerzeugungsanlage wird durch die EP 1 878 913 A1 offenbart. Dargelegt wird die Verwendung von Gleitlagern, die ein vorbestimmtes Lagerspiel aufweisen, wobei ein Axiallager entsteht, das im Betrieb nur einseitig anliegt. Im Fall einer Strömungsumkehr in Verbindung mit einem Anlagenstillstand kommen die Gleitflächen der Wasserturbine von den Gegenflächen des Axiallagers während des Anlaufs frei. Eine Gegenposition, für die wiederum ein Anlagekontakt vorliegt, wird erst durch eine Axialbewegung der gesamten Wasserturbine erreicht. Die hierfür aufzubringenden Schubkräfte liegen erst bei einer hinreichenden Anströmungsgeschwindigkeit in die Gegenrichtung vor. Bei diesem Zustand wird die Wasserturbine bereits im Umlauf sein, so dass das Gleitlager unmittelbar im Bereich der Flüssigkeitsreibung betrieben werden kann.

Das voranstehende genannte Konzept eines Lagerspiels zur Verbesserung des Anlaufverhaltens von Gleitlagern lässt sich nur für einige Bauformen von Unterwasserströmungsmaschinen realisieren. Für die typischerweise verwendeten Axialturbinen kann auf diese Weise keine Radiallagerung in Gleittagertechnik ausgebildet werden. Eine Möglichkeit zur Verbesserung des Anlaufverhaltens für solche Lager besteht darin, eine hydrostatische Anfahrhilfe vorzusehen wie in der CH667503 A5 vorgeschlagen und das Gleitlager erst ab einer bestimmten Drehzahl hydrodynamisch zu betreiben. Eine derartige hydrostatische Anfahrhilfe verwendet eine Pumpeinrichtung zum Einpressen einer Schmierstoffmenge, die ausreicht, einen Schmierstoffdruck entsprechend zum hydrodynamischen Betrieb aufzubauen. Insbesondere für großbauende Gleitlager tauchender Energieerzeugungsanlagen sind hierfür entsprechend dimensionierte Pumpenaggregate notwendig. Ferner kann zur Bereitstellung des notwendigen hohen Durchsatzes an Schmierstoff nicht auf ein Filtersystem verzichtet werden, insbesondere dann nicht, wenn die Gleitlager mit Umgebungswasser als Schmierstoff betrieben werden. Eine solche Einrichtung ist wiederum konstruktiv aufwendig und macht Maschinenkomponenten notwendig, die ein zusätzliches Ausfallrisiko für die Anlage darstellen - entsprechend erhöht sich der Wartungs- und Serviceaufwand.

Der Erfindung liegt die Aufgabe zu Grunde, die voranstehend beschriebenen Nachteile des Stands der Technik zu überwinden und ein Verfahren anzugeben, die es ermöglichen, ein hydrodynamisches Gleitlager insbesondere für großbauende tauchende Energieerzeugungsanlagen anzugeben, welche das Anlaufverhalten des Lagers verbessern. Die Lösung der Aufgabe sollte konstruktiv einfach und mit möglichst wartungsarmen Komponenten realisierbar sein.

Für das erfindungsgemäße Verfahren wird, ausgehend vom Stillstand der Anlage, unmittelbar vor dem Anlaufen Schmierstoff dem Lagerspalt zugeführt. Im Gegensatz zu den aus dem Stand der Technik bekannten hydrostatischen Anlaufhilfen wird jedoch ein deutlich geringeres Schmierstoffvolumen verwendet. Des Weiteren wird das vorbestimmte Schmierstoffvolumen als Schmierstoffstoß dem Gleitlager zugeführt, so dass zwischen den Gleitflächen ein Schmierstofffilm entsteht, der bevorzugt eine mittlere Dicke aufweist, die dem Mehrfachen der Höhe der maximalen Rauheiten auf den Gleitflächen entspricht. Unmittelbar nach dem Schmierstoffstoß befindet sich das Gleitlager im Flüssigkeitsreibungszustand, der sich jedoch aufgrund des Schmierstoffausflusses und der Volumenbegrenzung des durch den Schmierstoffstoß zugeführten Schmierstoffs wieder zurückbildet und ein schwacher Mischreibungszustand resultiert, der nachfolgend noch genauer beschrieben wird. Dabei vergeht aufgrund der Verdrängungsströmung des Schmierstoffs eine gewisse Zeitspanne, typischerweise einige Sekunden, bis sich die Gleitflächen wieder berühren.

Das zugeführte, begrenzte Schmierstoffvolumen dient dazu, ein Teil der mikroskopisch feinen Rauhigkeiten der Gleitflächen zu glätten und so die Reibungszahl herabzusetzen, so dass das zu lagernde Maschinenteil bereits bei geringeren Momenten im Umlauf gerät, sodann die Mischreibungsphase schneller durchläuft, um den gewünschten Bereich der Flüssigkeitsreibung und damit den hydrodynamischen Betrieb des Gleitlagers zu erreichen.

Die der Erfindung zugrunde liegende Erkenntnis beruht darauf, dass sich die Reibungszahl eines länger stillstehenden Gleitlagers deutlich von der Reibungszahl für den Fall unterscheidet, bei dem das zu lagernde Maschinenteil unmittelbar vorausgehend stillgesetzt wurde. Nachfolgend wird die Reibungszahl nach einem längeren Stillstand als Anlaufreibungszahl bezeichnet, während die Auslaufreibungszahl jene Reibungszahl benennt, die unmittelbar nach dem Stillsetzen vorliegt.

Die Differenz zwischen Anlaufreibungszahl und Auslaufreibungszahl ist nur zu einem geringen Teil auf Temperatureffekte im Schmierstoff zurückzuführen. Beim Auslauf eines rotierenden Maschinenteils im Gleitlager werden kontinuierlich Traganteile des Schmierstofffilms auf Festkörperanteile verlagert. Die Kontaktstellen der gegenüberliegenden Gleitflächen geben dabei zunächst elastisch oder plastisch nach. Wesentlich ist, dass unmittelbar nach dem Stillsetzen aufgrund von Oberflächenrauhigkeiten immer noch eine hinreichende Menge an Schmierstoff zwischen den Kontaktstellen vorhanden ist. Demnach liegt ein mittlerer Schmierstoffdruck unmittelbar nach dem Festsetzen vor, der nur langsam mit dem Abfluss des Schmierstoffs abnimmt. Entsprechend sinkt die Reibungszahl ausgehend von der Auslaufreibungszahl im Minutenbereich auf die Anlaufreibungszahl, die der eigentlichen Festkörperreibungszahl entspricht.

Erfolgt ein erneutes Wiederanlaufen des Maschinenteils bereits nach einigen Minuten nach dem Stillsetzen, so ist die Reibungszahl gegenüber der Anlaufreibungszahl verringert, entsprechend setzt sich das zu lagernde Bauteil bereits bei geringeren Drehmomenten in Bewegung. Das erfindungsgemäß eingepresste Volumen des Schmierstoffs wird daher so bemessen, dass das Gleitlager annähernd in den Zustand gebracht wird, der unmittelbar nach dem Stillsetzen vorliegt. Diese Maßnahme verbessert deutlich das Anlaufverhalten, gleichzeitig genügen auch für großbauende Gleitlager von tauchenden Energieerzeugungsanlagen mit Lagerschalendurchmessern im Meterbereich wenige Kubikzentimeter Schmierstoff zur Ausführung des erfindungsgemäßen Verfahrens. Ein solches Schmierstoffvolumen und dessen Einbringung in den Lagerspalt können mit einfachen Mitteln, beispielsweise mittels eines Druckspeichers oder eines Zylinderstellelements mit elektromagnetischer Betätigung, bewirkt werden. Hierdurch unterscheidet sich die Erfindung von den bekannten hydrostatischen Anlaufhilfen, die großbauende Pumpenaggregate zur Förderung eines hinreichenden Volumenstroms an Schmierstoff voraussetzen.

Gemäß einer bevorzugten Weitergestaltung der Erfindung wird die Bemessung des in den Lagerspalt eingepressten Volumens an Schmierstoff von der Dauer des Anlagenstillstands abhängig gemacht. Dabei kann ab einem bestimmten zeitlichen Schwellwert, das heißt für Stillstandszeiten länger als eine vorbestimmte Zeitdauer, ein vorbestimmtes Schmierstoffvolumen verwendet werden. Für kürzere Stillstandszeiten unterhalb des vorgegebenen Schwellwerts kann der Schmierstoffstoß angepasst werden, wobei für tauchende Energieerzeugungsanlagen ferner die Anströmungsgeschwindigkeit an der Wasserturbine und das daraus resultierende Antriebsmoment berücksichtigt werden kann.

Nachfolgend wird die Erfindung anhand von Ausführungsbeispielen in Verbindung mit Figurendarstellung genauer erläutert. In diesen ist im Einzelnen Folgendes dargestellt:
- Figur 1: zeigt schematisch vereinfacht ein Axialschnitt durch eine tauchende Energieerzeugungsanlage mit einer Vorrichtung zum Einpressen einer begrenzten Schmierstoffmenge in den Schmierspalt eines Gleitlagers.
- Figur 2: zeigt in einer schematischen Darstellung einer Stribeck-Kurve bei konstanter Schmierstoffviskosität.
- Figur 3: zeigt den realen Verlauf der Reibungszahl im Verhältnis zur Drehzahl beim An- und Auslauf unter Berücksichtigung einer veränderlichen Viskosität.

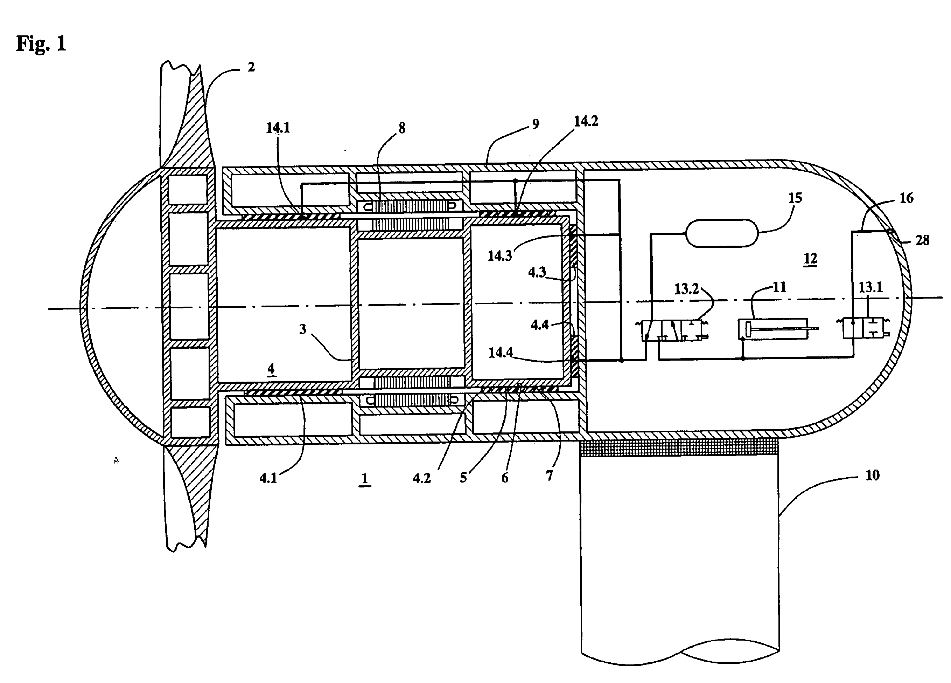

Figur 1 zeigt die wesentlichen Komponenten einer tauchenden Energieerzeugungsanlage als Beispiel einer Unterwasserströmungsmaschine 1 in der eine Vorrichtung zum Einpressen von Schmierstoff 12 mit begrenzten Volumen aufgenommen ist. Die Skizze ist schematisch vereinfacht und zeigt lediglich Grundkomponenten im Axialschnitt.

Teilweise dargestellt ist eine Wasserturbine 2, deren Turbinenblätter propellerförmig angelegt sind, und die zusammen mit dem zu lagernden Maschinenteil 3 eine umlaufende Einheit bildet. Zwischen dem Maschinenteil 3 und dem Gehäuse 9 ist ein Gleitlager 4 mit Lagerkomponenten 4.1, 4.2, 4.3 und 4.4 vorgesehen, die radial und axial wirken. Das Maschinenteil 3 trägt den Läufer eines elektrischen Generators 8, dessen Stator im Gehäuse 9 ausgebildet ist. Das Gleitlager 4 kann als Paarung eines harten und eines weichen beziehungsweise elastischen Lagerwerkstoffs ausgebildet sein, wobei durch die Lagerkomponenten 4.1, 4.2, 4.3 und 4.4 jeweils eine erste Gleitfläche 5 und eine gegenüberliegende, zweite Gleitfläche 6 mit einem zwischengelagerten Lagerspalt 7 gebildet werden. Dies ist exemplarisch anhand der Lagerkomponenten 4.1, 4.2, 4.3 und 4.4 dargestellt.

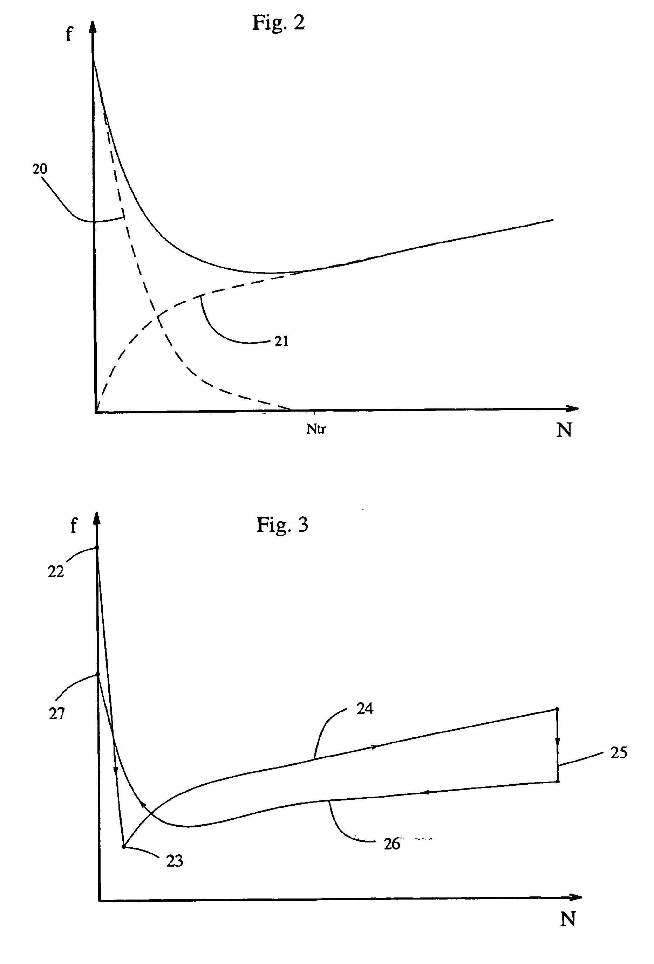

Zur Verdeutlichung des erfindungsgemäßen Verfahrens wird zunächst auf die schematische Darstellung der Stribeck-Kurve in Figur 2 verwiesen. Diese zeigt, ausgehend von einer konstanten Schmierstoffviskosität, den Verlauf der Reibungszahl f in Abhängigkeit der Drehdrehzahl N eines zu lagernden Maschinenteils in einem Gleitlager. Jeweils gestrichelt ist der Verlauf der Reibungszahl für Mischreibung 20 sowie der Verlauf der Reibungszahl für Flüssigkeitsreibung 21 dargestellt. Der durchgezogene Kurvenverlauf stellt die resultierende Reibungszahl f dar, wobei für Drehzahlen unterhalb einer Grenzdrehzahl Nₜᵣ der Mischreibungszustand mit wesentlichen Festkörperreibungsanteilen vorliegt. Für höhere Drehzahlen N oberhalb der Grenzdrehzahl Nₜᵣ schließt sich der Bereich der Flüssigkeitsreibung an.

Ein realer Verlauf der Reibungszahl f beim Betrieb des Gleitlagers ist in Figur 2 schematisiert dargestellt. Nach langen Stillstandszeiten wird eine Reibungszahl f vorliegen, die der Festkörperreibungszahl entspricht. Vorliegend wird hierfür der Begriff einer Anlaufreibungszahl 22 verwendet. Mit zunehmender Drehzahl N wird die Reibungszahl f absinken, bis der Beginn der Flüssigkeitsreibungsphase 23 bei Nₜᵣ erreicht wird.

Ferner ist in Figur 3 skizziert, dass beim Nenndrehzahlbetrieb 25 insbesondere aufgrund eines Temperaturanstiegs im Schmierstoff ein Absinken der Viskosität resultiert, die zu einer Verringerung der Reibungszahl f führt. Demgemäß liegen die Reibungszahlen f für den Anlauf 24 und für den Auslauf 26 nicht deckungsgleich.

Wird ein zunächst drehendes Gleitlager bis zum Stillstand geführt, resultiert eine Auslaufreibungszahl 27 unmittelbar nach dem Anlagenstillstand, die deutlich geringer ist als die Anlaufreibungszahl 22. Da keine Relativbewegung der Gleitflächen vorliegt, spielt eine Viskositätsveränderung des Schmiermittels, das sich unmittelbar nach dem Stillsetzen noch auf Temperatur befindet, eine untergeordnete Rolle. Demnach ist die Differenz zwischen Anlaufreibungszahl 22 und Auslaufreibungszahl 27 auf eine veränderte Festkörperreibung zurückzuführen. Dieser Umstand ist dadurch bedingt, dass zunächst in den mikroskopischen Eintiefungen der Gleitflächen Schmierstoffreste verbleiben und so die Oberflächenrauhigkeit herabgesetzt wird sowie die Zahl der Kontaktstellen zwischen den Gleitflächen deutlich verringert ist. Dieser Zustand bleibt aufgrund des langsamen Herausfließens des Schmierstoffs aus den mikroskopischen Eintiefungen über eine längere Zeitdauer, das heißt im Minutenbereich, erhalten.

Das erfindungsgemäße Verfahren macht sich diesen Umstand zunutze und hebt die erste Gleitfläche 5 und die zweite Gleitfläche 6 des Gleitlagers mittels eines Schmierstoffstoßes ab. Hierzu muss der eingepresste Schmierstoffdruck die gemittelte Flächenpressung des Gleitlagers 4 übersteigen. Bevorzugt wird ein zeitlicher Verlauf des Einpressdrucks des Schmiermittels gewählt, dessen Druckmaximum bevorzugt dem 3- bis 5-fachen des gemittelten Flächenpressdrucks im Lager entspricht, als besonders geeignet hat sich in etwa das 4-fache des gemittelten Flächenpressdrucks erwiesen. Dabei erfolgt das Abheben der ersten Gleitfläche 5 und der zweiten Gleitfläche 6 aufgrund der Begrenzung des Schmierstoffvolumens nur kurzzeitig. Ferner wird die Schmierstoffmenge so bemessen, dass die Gleitflächen 5, 6 im Verlauf des Schmierstoffstoßes einen hinreichenden Abstand gewinnen, der wenigstens dem Maximum der Höhenerstreckung der Rauheiten auf den Gleitflächen 5, 6 entspricht.

Bevorzugt wird jedoch ein Schmierstofffilm, der aus dem Schmierstoffstoß resultiert, dessen Dicke im gesamten Lagerspalt dem Mehrfachen der maximalen Höhenausdehnung der Rauheiten entspricht. In diesem Fall besteht aufgrund der Verdrängungsströmung beim Auslauf des Schmierstoffs aus dem Lagerspalt eine hinreichende Zeitdauer im Sekundenbereich, typischerweise 1 bis 5 Sekunden, bevor sich die Gleitflächen 5, 6 wieder berühren und dann aufgrund der vollflächigen Benetzung durch den Schmierstoff ein schwacher Mischreibungszustand folgt, dessen Reibungszahl im Wesentlichen der Auslaufreibungszahl 27 unmittelbar nach dem Stillsetzen des Gleitlagers 4 entspricht. Eine typische im Lagerspalt durch den Schmierstoffstoß kurzzeitig bewirkte Dicke des Schmierstofffilms beträgt 50 µm. Wird für die Gleitflächen jeweils eine Flächengröße von 1 m² angenommen, befindet sich während des Schmierstoffstoßes zum Zeitpunkt des völligen Abhebens der Gleitflächen 5, 6 ein Schmierstoffvolumen von 50 cm³ im Gleitlager 4. Dieses Schmierstoffvolumen fließt dann, wie voranstehend dargelegt, im Sekundenbereich ab.

Beim darauffolgenden Anlauf des zu lagernden Maschinenteils 3 sind demnach wesentliche Teile der ersten Gleitfläche 5 und der zweiten Gleitfläche 6 mit Schmierstoff benetzt, so dass die Reibungscharakteristik der zunächst zu durchlaufenden Mischreibungsphase bereits in einem Bereich mit einer verringerten Reibungszahl f beginnt, die annähernd der Auslaufreibungszahl 27 entspricht. Besonders bevorzugt wird das Anlaufen unmittelbar nach dem Beginn des Schmierstoffstoßes aufgenommen, so dass auch die kurze Zeit, in der die Gleitflächen 5, 6 des Gleitlagers beabstandet sind, zur Vereinfachung des Anlaufens verwendet werden kann.

Die Vorrichtung zum Einpressen von Schmierstoff 12 in den Lagerspalt 7 kann entweder im Gehäuse 9 oder in der Stützstruktur 10 der Unterwasserströmungsmaschine 1 ausgebildet sein. Erfindungsgemäß wird ein begrenztes Volumen an Schmierstoff in den Lagerspalt 7 vor dem Anlaufen eingepresst, so dass ein einfach ausgebildetes Stellelement, beispielsweise ein elektromagnetisch betätigter Zylinder oder ein Druckspeicher mit geringem Volumen, zur Bereitstellung des Schmierstoffs geeignet ist. Vorliegend wird ein Stellzylinder 11 verwendet, der über die Wegeventile 13.1 und 13.2 einen Druckspeicher 15 belädt aus dem über das Wegeventil 13.2 die Schmierstofftaschen 14.1, 14.2, 14.3, 14.4 mit einer erfindungsgemäß gering bemessenen Menge an Schmierstoff versorgt werden. Bevorzugt wird eine Vielzahl von Schmierstofftaschen 14.1, 14.2, 14.3, 14.4 verwendet, um den Schmierstoff möglichst gleichmäßig zum Ausgleich von Rauhigkeiten auf den Gleitflächen 5, 6 zu verteilen.

Ferner umfasst die Ausführungsform gemäß Figur 1 eine Saugleitung 16 zum Umgebungswasserbereich. Zusätzlich wird ein Filtersystem 28 und ein Bewuchsschutzsystem am Zulauf vorgesehen. Weitere Ausgestaltungen der Erfindung im Rahmen der nachfolgenden Schutzansprüche sind denkbar.

### Bezugszeichenliste

- 1: Unterwasserströmungsmaschine
- 2: Wasserturbine
- 3: Maschinenteil
- 4: Gleitlager
- 4.1, 4.2, 4.3, 4.4: Lagerkomponente
- 5: erste Gleitfläche
- 6: zweite Gleitfläche
- 7: Lagerspalt
- 8: Elektrischer Generator
- 9: Gehäuse
- 10: Stützstruktur
- 11: Stellzylinder
- 12: Vorrichtung zum Einpressen von Schmierstoff
- 13.1, 13.2: Wegeventil
- 14.1, 14.2, 14.3, 14.4: Schmierstofftasche
- 15: Druckspeicher
- 16: Saugleitung
- 20: Verlauf der Reibungszahl für Mischreibung
- 21: Verlauf der Reibungszahl für Flüssigkeitsreibung
- 22: Anlaufreibungszahl
- 23: Beginn der Flüssigkeitsreibungsphase
- 24: Anlauf
- 25: Nenndrehfrequenzbetrieb
- 26: Auslauf
- 27: Auslaufreibungszahl
- 28: Filtersystem

- f: Reibungszahl
- N: Drehzahl
- Nₜᵣ: Grenzdrehzahl

## Patentansprüche

1. Verfahren für den Betrieb eines Gleitlagers (4) zur Lagerung eines Maschinenteils (3) für eine Unterwasserströmungsmaschine umfassend folgenden Verfahrensschritt:
1.1 Vor dem Anlaufen des zu lagernden Maschinenteils (3) wird noch im Stillstand ein begrenztes Schmierstoffvolumen zwischen die Gleitflächen (5, 6) des Gleitlagers (4) als Schmierstoffstoß eingepresst,
1.2 wobei das eingepresste Schmierstoffvolumen so bemessen ist und der Schmierstoffstoß einen solchen zeitlichen Druckverlauf aufweist, dass die Gleitflächen (5, 6) kurzzeitig voneinander abheben und mit dem Ausfluss des Schmierstoffs aus dem Gleitlager (4) in einen schwachen Mischreibungszustand zurückfallen, dessen Reibungskoeffizient f kleiner oder gleich der Auslaufreibungszahl (27) unmittelbar nach dem Stillsetzen des Maschinenteils (3) ist.

2. Verfahren nach Anspruch 1, **dadurch gekennzeichnet, dass** das Anlaufen des zu lagernden Maschinenteils (3) nach dem Beginn des Schmierstoffstoßes erfolgt.

3. Verfahren nach einem der Ansprüche 1 oder 2, **dadurch gekennzeichnet, dass** die Gleitflächen (5, 6) durch den Schmierstoffstoß soweit voneinander abgehoben werden, dass entlang der gesamten Lagerflächen (5, 6) kurzzeitig ein Schmierstofffilm entsteht, dessen Dicke im gesamten Lagerspalt die maximale Höhenerstreckung der Rauheiten auf den Gleitflächen (5, 6) übersteigt.

4. Verfahren nach Anspruch 3, **dadurch gekennzeichnet, dass** der kurzzeitig entstehende Schmierstofffilm eine Dicke aufweist, die dem Mehrfachen der maximalen Höhenerstreckung der Rauheiten auf den Gleitflächen (5, 6) entspricht.

5. Verfahren nach einem der vorausgehenden Ansprüche, **dadurch gekennzeichnet, dass** als Schmierstoff für das Gleitlager (4) Wasser verwendet wird.

6. Verfahren nach Anspruch 3, **dadurch gekennzeichnet, dass** das Wasser zur Schmierung des Gleitlagers (4) Umgebungswasser ist.

7. Verfahren nach wenigstens einem der Ansprüche 3 oder 4, **dadurch gekennzeichnet, dass** das als Schmierstoff verwendete Wasser gefiltert ist.

8. Verfahren nach einem der vorausgehenden Ansprüche, **dadurch gekennzeichnet, dass** das Gleitlager (4) für den Zustrom von Wasser als Schmierstoff im fluidischen Kontakt mit dem Außenbereich der Unterwasserströmungsmaschine steht.

## Claims

1. A method for operating a plain bearing (4) for bearing a machine part (3) for an underwater fluid-flow machine, comprising the following method step:
1.1 before the starting of the machine part (3) for bearing, a limited lubricant volume is pressed still in standstill between the sliding surfaces (5, 6) of the plain bearing (4) as a lubricant injection;
1.2 with the injected lubricant volume being dimensioned and the lubricant injection having such a temporal pressure progression in such a way that the sliding surfaces (5, 6) will briefly lift off from one another and will fall back to a weak mixed friction state with the outflow of the lubricant from the plain bearing (4), the coefficient of friction f of which is smaller than or equal to the coasting friction count (27) directly after the stopping of the machine part (3).

2. A method according to claim 1, **characterized in that** the starting of the machine part (3) for bearing occurs after the beginning of the lubricant injection.

3. A method according to one of the claims 1 or 2, **characterized in that** the sliding surfaces (5, 6) are lifted off to such an extent from one another by the lubricant injection that a lubricant film is produced briefly along the entire bearing surfaces (5, 6), the thickness of which exceeds the maximum height extension of the areas of roughness on the sliding surfaces (5, 6) in the entire bearing clearance.

4. A method according to claim 3, **characterized in that** the briefly produced lubricant film has a thickness which corresponds to several times the maximum height extension of the areas of roughness on the sliding surfaces (5, 6).

5. A method according to one of the preceding claims, **characterized in that** water is used as the lubricant for the plain bearing (4).

6. A method according to claim 3, **characterized in that** the water for lubricating the plain bearing (4) is ambient water.

7. A method according to at least one of the claims 3 or 4, **characterized in that** the water used as the lubricant is filtered.

8. A method according to one of the preceding claims, **characterized in that** the plain bearing (4) is in fluidic connection with the outside area of the underwater fluid-flow machine for the inflow of water as the lubricant.

## Revendications

1. Procédé pour faire fonctionner un palier lisse (4) destiné à supporter une partie de machine (3) pour une turbomachine immergée, comprenant l'étape de procédé suivante :
1.1 avant le démarrage de la partie de machine (3) à supporter, un volume de lubrifiant limité est injecté à l'arrêt entre les surfaces de glissement (5, 6) du palier lisse (4) sous la forme d'un coup de lubrification,
1.2 le volume de lubrifiant injecté étant dimensionné de telle façon et le coup de lubrifiant présentant une évolution de la pression dans le temps telle que les surfaces de glissement (5, 6) se décollent un court instant l'une de l'autre et reviennent, avec l'écoulement du lubrifiant hors du palier lisse (4), dans un état de frottement mixte faible dont le coefficient de frottement f est inférieur ou égal au coefficient de frottement en fin de mouvement (27) immédiatement après l'arrêt de la partie de machine (3).

2. Procédé selon la revendication 1, **caractérisé en ce que** le démarrage de la partie de machine (3) à supporter a lieu après le début du coup de lubrification.

3. Procédé selon l'une des revendications 1 ou 2, **caractérisé en ce que** les surfaces de glissement (5, 6) sont décollées l'une de l'autre par le coup de lubrification jusqu'à ce qu'il se forme le long de toutes les surfaces de glissement (5, 6), pendant un court instant, un film de lubrifiant dont l'épaisseur dépasse dans tout l'écartement du palier l'étendue maximale en hauteur des rugosités sur les surfaces de glissement (5, 6).

4. Procédé selon la revendication 3, **caractérisé en ce que** le film de lubrifiant qui se forme pendant un court instant présente une épaisseur qui correspond à plusieurs fois l'étendue maximale en hauteur des rugosités sur les surfaces de glissement (5, 6).

5. Procédé selon l'une des revendications précédentes, **caractérisé en ce que** le lubrifiant utilisé pour le palier lisse (4) est de l'eau.

6. Procédé selon la revendication 3, **caractérisé en ce que** l'eau destinée à la lubrification du palier lisse (4) est de l'eau environnante.

7. Procédé selon l'une au moins des revendications 3 ou 4, **caractérisé en ce que** l'eau utilisée comme lubrifiant est filtrée.

8. Procédé selon l'une des revendications précédentes, **caractérisé en ce que** le palier lisse (4) est en communication de fluide avec l'extérieur de la turbomachine immergée en vue de l'arrivée d'eau servant de lubrifiant.
